# EUROPÄISCHE PATENTSCHRIFT

(11) **EP 0 999 743 B1**
(45) Veröffentlichungstag und Bekanntmachung des Hinweises auf die Patenterteilung: **09.10.2002**
(21) Anmeldenummer: 98940186.4
(22) Anmeldetag: 08.07.1998
(51) Int. Cl.: A01N 25/18, A01N 53/00

(54) **VERBESSERTE INSEKTIZID ENTHALTENE GELFORMULIERUNGEN**
IMPROVED GEL FORMULATIONS CONTAINING INSECTICIDE
FORMULATIONS DE GELS CONTENANT UN INSECTICIDE AMELIOREES

(30) Priorität: 21.07.1997 DE 19731156
(43) Veröffentlichungstag der Anmeldung: 17.05.2000
(73) Patentinhaber: Bayer Aktiengesellschaft, 51368 Leverkusen (DE)
(72) Erfinder: KALDER, Dietmar, D-51379 Leverkusen (DE); JUNG, Rolf, D-51067 Köln (DE); MIELKE, Burkhard, D-51515 Kürten (DE)
(86) Internationale Anmeldenummer: EP9804253
(87) Internationale Veröffentlichungsnummer: WO99004629

(56) Entgegenhaltungen:
- EP-A- 0 253 640
- EP-A- 0 693 254
- WO-A-95/09604
- GB-A- 1 587 396
- GB-A- 2 022 417
- GB-A- 2 070 933

## Beschreibung

Die vorliegende Erfindung betrifft neue insektizide Gelformulierungen zur geregelten und langanhaltenden Freisetzung von insektiziden Wirkstoffen mittels einer Wärmequelle. Diese neuen Gelformulierungen sind dadurch gekennzeichnet, daß sie wenigstens einen Typ eines Insektizides, und wenigstens einen verdampfungskontrollierenden Stoff (Verdampfungsmodifikator), aus der Gruppe der natürlich nachwachsenden Rohstoffe wie Rapsöl, Rapsölmethylester oder farbloser bis leicht gelblicher Guerbet-Alkohol (CAS-Nr.: 67 187-86-0) oder 2-Hexyldecan-1-ol (CAS-Nr.: 36311-34-9) in Kombination mit einem als Gelbildner geeigneten Feststoff enthalten.

Die vorliegende Erfindung basiert auf bekannten Gelformulierungen wie sie in EP 0 693 254 beschrieben sind, wobei insektizide Wirkstoffe mit neuartigen, alternativen Lösungsmitteln in Verbindung mit Duft-, Farb und Hilfsstoffen über einen längeren Zeitraum unzersetzt eine optimale Wirkung haben sollen.

Der Einsatz dieser neuen Wirkstofformulierung soll in tiefgezogenen oder gegossenen Behältern aus Kunststoff oder Metall erfolgen, die offen oder mit geeignetem Gewebe, Folien aus Kunststoff, z.B. Polypropylenfolie oder Metall verschlossen sind, die für die flüchtigen Komponenten durchlässig sind, wie sie in EP 0 693 254 beschrieben sind. Diese Tiefzieh-Behälter können in einem elektrischen Heizgerät zum Abtöten von Insekten, z.B. Mücken, eingesetzt werden.

Im Falle des Tötens von Stechmücken mit einem elektrischen Heizgerät, sogenannten Plättchenverdampfer, ist allgemein bekannt, daß besonders ausgewählte Stoffe, wie Zellstoff- und Baumwollkarton, Asbest, Keramit und/oder poröse Kunstharze mit Pyrethroid-Insektiziden imprägniert werden, um Insektizidplatten zu erhalten, wobei die Insektizide durch die Wirkung des Heizgerätes zur Mückenvertilgung, das eine Wärme von 120 - 190°C erzeugt, verflüchtigt werden.

Ein erheblicher Nachteil dieser Plättchenverdampfer liegt im ungünstigen Verhältnis zwischen Energieaufwand und zu verdampfendem Wirkstoff, da die Wirkstoffanteile im Verhältnis zu den Hilfsstoffen als gering anzusehen sind. Ferner bedingt die hohe Arbeitstemperatur dieser Plättchenverdampfer, daß nur wenige Wirkstoffe überhaupt dafür geeignet sind und diese darüber hinaus systembedingt über die vorgegebene

Wirkdauer ungleichmäßig abgegeben werden. Die Wirkdauer dieser Verdampferplättchen ist dabei auf maximal 12 Stunden begrenzt. Das ungünstige Verhältnis von Wirkstoff/Wirkstoffträger erfordert schließlich ständig einen größeren Vorrat an Verdampferplättchen, was zu erheblichem Materialverbrauch an Trägerstoffen und Verpackungsmaterial führt.

Auch die bereits vielfach für den Hausgebrauch verwendeten Geräte für die Verdampfung einer insektiziden Wirkstofflösung mittels eines beheizten Dochtes (GB 2 153 227), worin der Wirkstoff in einem Kerosin-Gemisch gesättigter, aliphatischer Kohlenwasserstoffe gelöst wird, das mittels des Dochtes elektrisch verdampft wird, weisen erhebliche Nachteile auf.

Neben der Tatsache, daß auch diese Verdampfersysteme bei Betriebstemperaturen zwischen 120 und 190°C arbeiten, benötigen sie ein eigenes Verteilungssystem (Docht) und erhebliche Mengen an Lösungsmitteln. Die im Verhältnis zum Wirkstoff überproportionale Menge an Lösemittel führt bei der Produktanwendung zu einer hohen Konzentration von Lösemitteln bzw. Hilfsstoffen im Raum, was wiederum zu einer - häufig von Verbrauchern beobachteten und reklamierten - Verschmutzung von Wänden und Gegenständen, die sich in der Nähe dieser Geräte befinden, führt.

Weitere Nachteile dieser Formulierungen sind das große Volumen der Lösemittelbehälter und die Gefahr des Auslaufens des Lösemittels, was erhebliche Probleme beim Transport und Gefahren bei der Anwendung beinhaltet.

Weiterhin sind in der EP 0 693 254 Gelformulierungen genannt, die zum Nachteil haben, daß sie zu lange Verweilzeiten in Innenräumen haben und zudem aus sehr teuren Bestandteilen bestehen.

Die neuen erfindungsgemäßen Insektizid enthaltenden Gelformulierungen umfassen Mischungen, die wenigstens einen Typ eines pyrethroiden Insektizids, einen verdampfungskontrollierenden Stoff und einen als Gelbildner geeigneten anorganischen Feststoff enthalten.

Als Wirkstoffe können die in der EP 0 693 254 genannten Wirkstoffe zum Einsatz kommen.

Besonders gut geeignet sind dabei Formulierungen mit dem Wirkstoff Transfluthrin (Bayothrin®, 2,3,5,6-Tetrafluorbenzyl-(+)-1R-trans-2,2-dimethyl-3-(2,2-dichlorvinyl)-cyclopropancarboxylat) mit vermindertem Gehalt an Wirkstoff und in Verbindung mit neuen verdampfungskontrollierenden Stoffen, auch Verdampfungsmodifikatoren genannt, die in der Verarbeitung ein stark vermindertes Gefahrenpotential aufweisen und zudem auch im Innenraum schnell abbaubar sind.

Besonders bevorzugt werden natürlich nachwachsende Rohstoffe wie Rapsöl, Rapsölsäuremethylester und farbloser bis leicht gelblicher Guerbet-Alkohol von flüssiger/fester Konsistenz mit sehr schwachem Eigengeruch, CAS-Nr.: 67187-86-0 (Guerbitol 32/36®), farbloser bis leicht gelblicher Guerbet-Aalkohol von flüssiger Konsistenz mit sehr schwachem Eigengeruch = 2-Hexyldecan-1-ol, CAS-Nr.: 36311-34-9 (Guerbitol 16®).

Insbesondere bevorzugt ist farbloser bis leicht gelblicher Guerbet-Alkohol von flüssiger Konsistenz = 2-Hexyldecan-1-ol, CAS-Nr.: 36311-34-9 (Guerbitol 16®).

Die Formulierungen enthalten im allgemeinen zwischen 1,0 und 95 Gew.-% insektiziden Wirkstoff, vorzugsweise zwischen 5,0 und 80%, insbesondere 20 bis 50 Gew.-%.

Die Formulierungen enthalten weiterhin im allgemeinen zwischen 10 und 90 Gew.-% Verdampfungsmodifikatoren, vorzugsweise zwischen 40 und 80 % sowie im allgemeinen zwischen 1 bis 12 % Gelbildner, vorzugsweise zwischen 6 bis 10 %.

Das Verhältnis Wirkstoff/Verdampfungsmodifikator beträgt in den erfindungsgemäßen Insektizid enthaltenden Gelformulierungen zwischen 9 und 0,1; bevorzugt zwischen 2,0 und 0,2.

Diesen Mischungen können darüber hinaus organische oder anorganische Hilfsstoffe, Stabilisatoren, Duftstoffe und Farbstoffe zugesetzt werden, wie sie unter anderem auch in EP 0 693 254 beschrieben sind.

Die Formulierungen müssen über einen langen Zeitraum eine optimale Lagerstabilität aufweisen.

Die erfindungsgemäßen Gelformulierungen werden hergestellt, indem in einer entsprechenden Mischapparatur (Planetenrührer) zunächst der Wirkstoff mit Verdampfungsmodifikator und Stabilisator sowie gegebenenfalls zusätzliche Lösungsmittel bei Raumtemperatur bis zur klaren Lösung verrührt werden. Anschließend wird unter Vakuum der Gelbildner zugesetzt und intensiv bis zur homogenen Gelbildung gerührt. Vor der endgültigen Gelabmischung mit Gelbildner können zu der vorliegenden klaren Lösung gegebenenfalls Parfümöle und Farbstoffe unter Rühren bis zur vollständigen Homogenität zugesetzt werden.

Zur Anwendung wird der Folienbehälter mit dem angefärbten Gel in ein Heizgerät eingesteckt, dessen Front transparent oder das mit einem Sichtspalt versehen ist.

Während des Gebrauchs des Heizgerätes trocknet der Inhalt des Folienbehälters, der durch eine farbliche Markierung am Behälter selbst oder am Heizgerät nicht sichtbar ist.

Durch die transparente Front des Heizgerätes oder durch den Sichtspalt ist nur noch der leere Folienbehälter zu erkennen.

Eine weitere Variante der optischen Endpunkterkennung durch zugesetzte Farbstoffe kann auch durch Farbumschlag zu einer anderen Farbe hin erfolgen, wenn die Wirkstoffe und gegebenenfalls das Lösungsmittel abgedampft sind.

Die vorliegende Erfindung soll anhand der vorliegenden Beispiele erläutert werden:

### Beispiel 1

### Formulierungen mit neuen Verdampfungsmodifikatoren

| Beispiel | Gehalt Insektizid | Gelbildner | Stabilisator | Verdampfungsmodifikator |
|---|---|---|---|---|
| 1.1. | 25% Transfluthrin® | 6 %Aerosil 200® | 1% BHT | 64% Enerpar M002® |
| 1.2. | 25% Transfluthrin® | 8% Aerosil COK 84® | 1% BHT | 64% Guerbitol 16® |

### Beispiel 2

Die Insektizid enthaltenden Gelformulierungen können folgendermaßen hergestellt werden:

### 2.1

In einer Rührapparatur werden für einen 100 kg Ansatz 25 kg flüssiges Transfluthrin® (Temperatur ca. 40°C) vorgelegt, 64 kg Enerpar M002® und 1 kg BHT zugegeben und bis zur klaren Lösung verrührt. Zusätzlich können in die Formulierung bevorzugt die Parfümöle Aurantiol, Citronellöl, C10-C16 Aldehyd, Birkenteeröl, Benzylsalicylat, Lavendelöl oder Rosenöl in Kombination mit, bzw. ohne die Farbstoffe Hostasol gelb®, Resolin-Brillantrot BLS®, 1,4-Diaminoanthrachinon, Alizarin VK6/225, Fettrot HRR®, Fettrot G®, Solvaperm Grün G oder Sudan Blau 670® eingerührt werden. In die klare Lösung werden unter schnellem Rühren 6 kg Aerosil 200 bis zur Gelbildung unter Vakuum eingetragen.

### 2.2

In einer Rührapparatur werden für einen 100 kg Ansatz 25 kg flüssiges Transfluthrin® (Temperatur) ca. 40°C vorgelegt, 64 kg Guerbitol16® und 1 kg BHT zugegeben und bis zur klaren Lösung verrührt Zusätzlich können in die Formulierung bevorzugt die Parfümöle Aurantiol, Citronellöl, C10-C16 Aldehyd, Birkenteeröl, Benzylsalicylat, Lavendelöl oder Rosenöl in Kombination mit, bzw. ohne die Farbstoffe Hostasol gelb®, Resolin-Brillantrot BLS®, 1,4-Diaminoanthrachinon, Alizarin VK6/225, Fettrot HRR®, Fettrot G®, Solvaperm Grün G oder Sudan Blau 670® eingerührt werden. In die klare Lösung werden unter schnellem Rühren 8 kg Aerosil COK 84 ® bis zur Gelbildung unter Vakuum eingetragen.

Zur Anwendung werden die Gelformulierungen, je nach Anwendungsdauer, im allgemeinen in Mengen von 0,2-0,5 g, vorzugsweise in Mengen von 0,2-0,3 g in tiefgezogene oder gegossene Behälter gefüllt und mit Polypropylenfolie versiegelt. Bevorzugte Behältermaterialien sind Aluminium, Polyester, Polyethylen, Metalle. Die Behältergröße ist so ausgewählt, daß die Bodenfläche des Behälters gleich groß wie die Heizfläche des Heizgerätes ist und Temperaturen von 70 bis 112°C überträgt.

Die geregelte und langanhaltende Freisetzung von insektiziden Wirkstoffen wird durch die Anwendung der Beispiele 2.1 und 2.2 wie folgt dargestellt:

1,6 g der Insektizid enthaltenden Gelformulierungen werden in tiefgezogenen Aluminiumbehältern mit den Maßen (4 X 2,5 X 0,4 cm) gleichmäßig auf der Oberfläche verteilt. und mit PP-Folie Walothen C50SE® oder Trespaphan 6ND50® versiegelt. In einem Heizgerät mit einer Temperatur von 100-112°C wird der Behälter täglich 8 Stunden erwärmt und die Abgabemengen an Formulierung bestimmt.

Die Ergebnisse der Abdampfversuche sind in Beispiel 3 dargestellt.

### Beispiel 3

### Abgaberaten der Formulierungen aus dem Beispiel 1.1 und 1.2 in [mg/h]

Heizertemperaturen: 105-107°C
Spannung: 230 V
Raumtemperatur: 20-22°C
Zyklendauer: 8 h
Zyklenpause: 4 h
Formulierungseinwaage: 1,6 g

| | Beispiel 1.1 | Beispiel 1.2 |
|---|---|---|
| | Gewichtsverlust pro Stunde in mg | |
| Zyklus | | |
| 1 | 4,6 | 4,6 |
| 2 | 4,8 | 4,5 |
| 3 | 4,1 | 4,4 |
| 4 | 4,1 | 4,3 |
| 5 | 3,2 | 4,8 |
| 8 | 3,2 | 4,4 |
| 10 | 3,2 | 4,3 |
| 12 | 3,2 | 4,1 |
| 14 | 2,7 | 4,0 |
| 16 | 2,5 | 3,8 |
| 18 | 2,4 | 3,5 |
| 20 | 2,2 | 3,5 |
| 22 | 2,0 | 3,9 |
| 24 | 2,0 | 3,8 |
| 26 | 2,0 | 3,4 |
| 28 | 2,1 | 3,3 |
| 30 | 1,4 | 2,9 |
| 32 | 1,2 | 2,6 |
| 34 | 1,3 | 2,5 |
| 36 | 1,2 | 2,7 |
| 38 | 1,0 | 2,3 |
| 40 | 1,1 | 2,2 |
| 42 | 0,9 | 2,2 |
| 44 | 0,8 | 1,6 |
| 46 | 0,8 | 1,3 |
| 48 | 0,8 | 1,2 |
| 50 | 0,6 | 1,0 |

### Beispiel 4

### Biologische Wirkung auf Mücken der Art Aedes aegypti, sensibel

- Raumgröße :: 36 m³
- Raumart:: 1 Fenster offenstehend
Temperatur: 20-28°C
rel. Raumfeuchte: 17-34%
Heizertemperatur: 105-110°C
Gehalt an Wirkstoff: 25% Transfluthrin Formulierungseinwaage: 1,6g

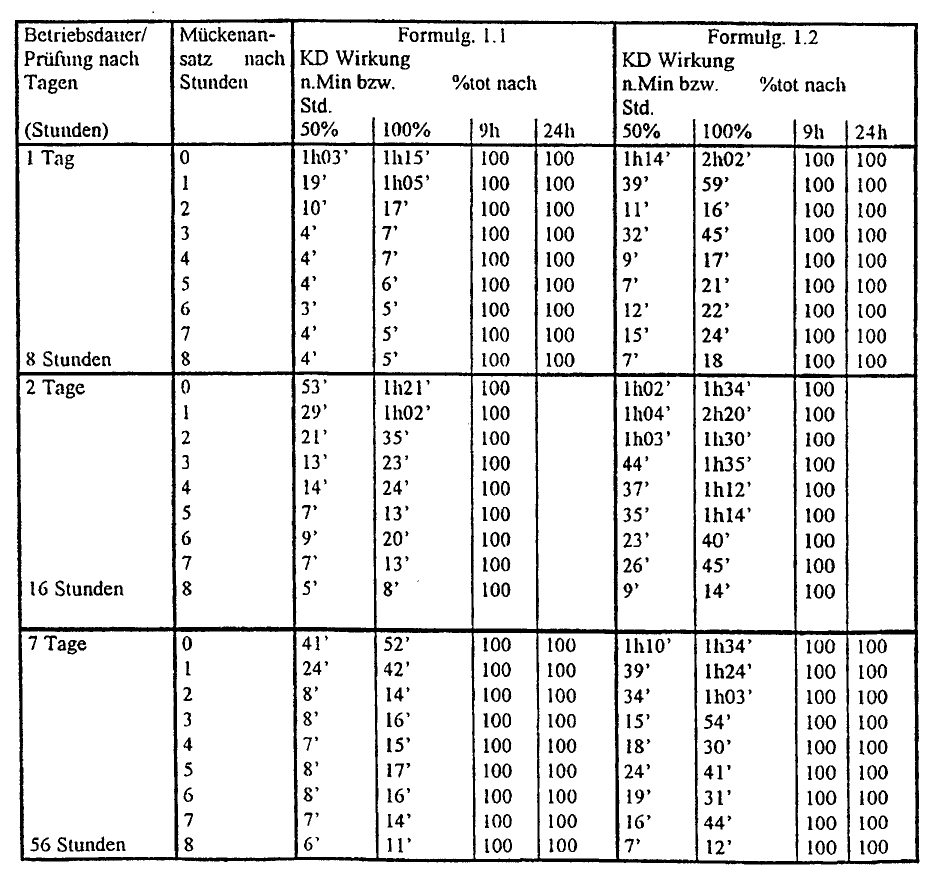

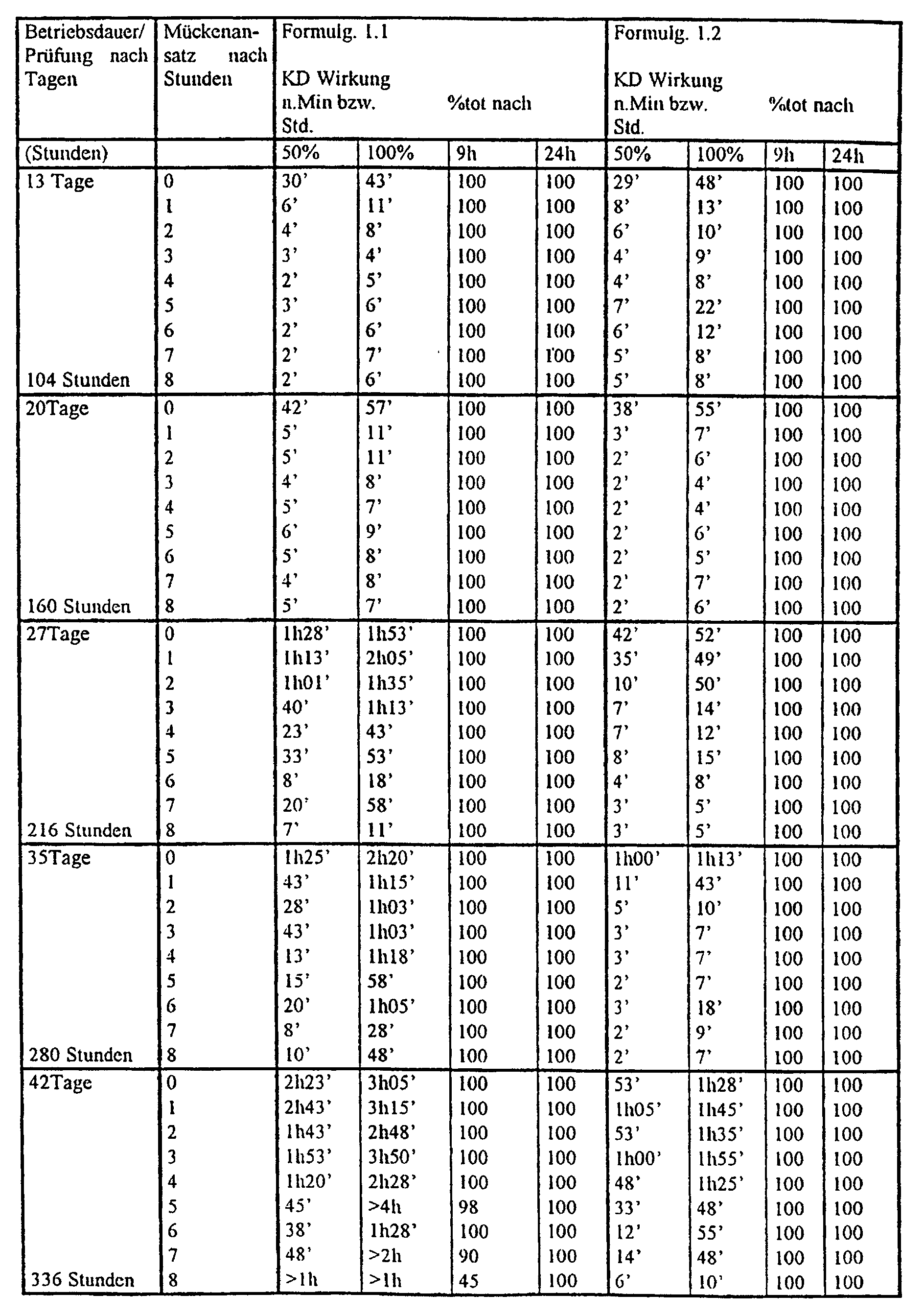

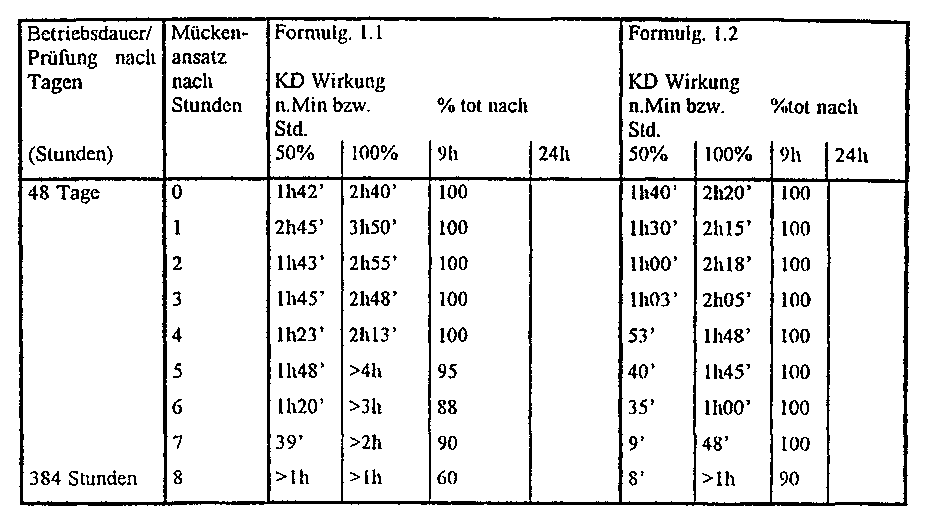

Aufgrund der vorliegenden Ergebnisse ist die biologische Wirkung der hier genannten Formulierungen ausreichend.

## Patentansprüche

1. Insektizide Gelformulierung mit geregelter und langanhaltender Freisetzung von Insektiziden Wirkstoffen mittels einer Wärmequelle, **dadurch gekennzeichnet, daß** sie wenigstens einen insektiziden Wirkstoff aus der Gruppe der Pyrethroide, mindestens einen Verdampfungsmodifikator aus der Gruppe der natürlich nachwachsenden Rohstoffe wie Rapsöl, Rapsölmethylester oder farbloser bis leicht gelblicher Guerbet-Alkohol (CAS-Nr.: 67 187-86-0) oder 2-Hexyldecan-1-ol (CAS-Nr.: 36311-34-9) sowie übliche Gelbildner und Formulierungshilfsstoffe enthalten.

2. Insektizide Gelformulierungen gemäß Anspruch 1, **dadurch gekennzeichnet, daß** sie den insektiziden Wirkstoff Transfluthrin enthalten.

3. Insektizide Gelformulierungen gemäß Anspruch 1 oder 2, **dadurch gekennzeichnet, daß** sie 10 bis 90 Gew.-% Verdampfungsmodifikatoren und 1 bis 12 % Gelbildner sowie 5 bis 80 Gew.-% insektiziden Wirkstoff enthalten.

4. Verfahren zur Herstellung von insektiziden Gelformulierungen gemäß einem der Ansprüche 1 bis 3, **dadurch gekennzeichnet, daß** man den insektiziden Wirkstoff und den Verdampfungsmodifikator sowie gegebenenfalls Stabilisator und weitere Lösungsmittel und Hilfsstoffe bis zur klaren Lösung verrührt und anschließend unter vermindertem Druck Gelbildner zusetzt sowie gegebenenfalls Farbstoffe, Parfümöle und/oder andere Hilfsstoffe und diese intensiv bis zur homogenen Gelbildung rührt und diese homogene Gelformulierung in geeignete Behälter füllt.

## Claims

1. Insecticidal gel formulations having controlled and sustained release of insecticidal active compounds by means of a heat source, **characterized in that** they comprise at least one insecticidal active compound from the group of the pyrethroids, at least one vaporization modifier from the group of the naturally regrowing raw materials, such as rapeseed oil, rapeseed oil methyl ester or colourless to slightly yellowish Guerbet alcohol (CAS No.: 67 187-86-0) or 2-hexyldecan-1-ol (CAS No.: 36 311-34-9) and customary gel formers and formulation auxiliaries.

2. Insecticidal gel formulations according to Claim 1, **characterized in that** they comprise the insecticidal active compound transfluthrin.

3. Insecticidal gel formulations according to Claim 1 or 2, **characterized in that** they comprise from 10 to 90% by weight of vaporization modifiers and from 1 to 12% by weight of gel formers and also from 5 to 80% by weight of insecticidal active compound.

4. Process for preparing insecticidal gel formulations according to one of Claims 1 to 3, **characterized in that** the insecticidal active compound and the vaporization modifier and, if appropriate, stabilizer and other solvents and auxiliaries are stirred to give a clear solution, gel formers and, if appropriate, colorants, perfume oils and/or other auxiliaries are subsequently added under reduced pressure and stirred intensively until a homogeneous gel is formed, and this homogeneous gel formulation is filled into suitable containers.

## Revendications

1. Formulations insecticides sous forme de gel à libération réglée et prolongée de substances insecticides actives au moyen d'une source de chaleur, **caractérisées en ce qu'**elles contiennent au moins une substance insecticide active du groupe des pyréthroïdes, au moins un modificateur de vaporisation du groupe des matières premières naturellement renouvelables telles que l'huile de colza, l'ester méthylique d'huile de colza ou un alcool de Guerbet incolore ou légèrement jaunâtre (CAS-N° : 67 187-86-0) ou le 2-hexyldécane-1-ol (CAS-N° : 36 311-34-9) ainsi que des gélifiants et des auxiliaires de formulation classiques.

2. Formulations insecticides sous forme de gel suivant la revendication 1, **caractérisées en ce qu'**elle contiennent la transfluthrine comme substance insecticide active.

3. Formulations insecticides sous forme de gel suivant la revendication 1 ou 2, **caractérisées en ce qu'**elles contiennent 10 à 90 % en poids de modificateurs de vaporisation et 1 à 12 % de gélifiants ainsi que 5 à 80 % en poids de substance insecticide active.

4. Procédé de production de formulations insecticides sous forme de gel suivant l'une des revendications 1 à 3, **caractérisé en ce qu'**on délaye la substance insecticide active et le modificateur de vaporisation ainsi que, le cas échéant, un agent stabilisant et d'autres solvants et substances auxiliaires jusqu'à formation d'une solution claire, puis on ajoute sous pression réduite l'agent gélifiant ainsi que, le cas échéant, des colorants, des huiles essentielles et/ou d'autres substances auxiliaires et on agite énergiquement le mélange jusqu'à formation d'un gel homogène et on charge cette formulation homogène sous forme de gel dans des récipients appropriés.
